# EUROPEAN PATENT SPECIFICATION

(11) **EP 1 462 695 B1**
(45) Date of publication and mention of the grant of the patent: **23.08.2006**
(21) Application number: 03447066.6
(22) Date of filing: 27.03.2003
(51) Int. Cl.: F16K 27/02, F16L 47/00

(54) **Stopcock**
Absperrhahn
Robinet d'arrêt

(43) Date of publication of application: 29.09.2004
(73) Proprietor: Indigne, Mark, 2830 Willebroek (BE)
(72) Inventor: Indigne, Mark, 2830 Willebroek (BE)
(74) Representative: Leherte, Georges M.L.M.

(56) References cited:
- GB-A- 2 024 373
- US-A- 4 230 301
- US-A- 4 343 456
- US-A- 4 368 754
- US-A- 4 971 366
- US-B1- 6 226 937

## Description

The invention relates to an improved stopcock for controlling the passage of fluids and more specifically liquids, in particular aqueous liquids.

Various types of stopcocks for controlling the passage of fluids exist in the art. Stopcocks used for controlling the passage of aqueous liquids generally involve a housing with an inlet and an outlet access, a closure plug in the housing controlling the passage between inlet and outlet, a housing cover and a driving spindle for said closure plug extending through said housing cover. The body of such stopcocks are mostly made of various metals, with some parts (joints, sealing rings, closure plug) made of synthetic materials.
The use of metal involves several drawbacks, like the relatively high weight of the stopcocks, the manufacturing cost (casting moulds, tooling, etc.) and potential corrosion and deposit problems.
Under those circumstances the idea of making stopcocks of plastic may appear an obvious approach.
Numerous problems however arise when developing this idea in practice, linked to the strength and water resistance properties of the materials, the compatibility of strength and moulding stream distribution, etc., etc., so that a "plastic stopcock" has, up to now, remained a theoretical concept.

Thus, for instance, US patent 4 230 301 A discloses a stopcock comprising a housing with an inlet and an outlet access, a closure plug in the housing controlling the passage between inlet and outlet, a housing cover and a driving spindle for said closure plug extending through said housing cover, whereby said housing with its inlet and outlet accesses and said housing cover are made of synthetic/plastic material.

The stopcock proposed in this patent has however not proven satisfactory in practice, in particular at pressures prevailing in current water distribution systems.

It is the object of this invention to provide, as an actual, practical object, a stopcock for controlling the passage of fluids, in particular water and aqueous liquids, preferably at pressures up to 1,62 MPa (16 kg/cm²) or more, which has its main constituting parts made of synthetic material.

In accordance with this objective, the invention provides a stopcock, in particular a stopcock designed for withstanding fluid pressures of at least 16 kg, comprising a housing with an inlet and an outlet access, a closure plug in the housing controlling the passage between inlet and outlet, a housing cover and a driving spindle for said closure plug extending through said housing cover, wherein said housing with its inlet and outlet accesses and said housing cover are made of synthetic / plastic material, wherein
the housing with its inlet and outlet accesses consists of a moulded plastic piece comprising
a longitudinal duct with longitudinal reinforcing ribs,
and a plug cavity provided with its axis perpendicular to said longitudinal duct, with reinforcing ribs of said plug cavity extending parallel to its axis and with at least three peripheral reinforcement zones for fixing the housing cover to the housing,
and said housing cover consists of a moulded plastic piece comprising
a cover surface with radial reinforcement ribs and/or one or more peripheral rib(s), perpendicular to the plane of said cover surface, with at least three peripheral reinforcement zones for fixing the housing cover to the housing,
and a hollow protrusion, along the axis of said plug cavity, for holding said driving spindle for the closure plug, provided with radial reinforcement ribs.

According to a further preferred feature of the invention, the housing cover comprises a cover surface with radial reinforcement ribs and one or more peripheral rib(s), perpendicular to the plane of said cover surface.

According to the invention the peripheral reinforcement zones on the housing cover may preferably be located on the peripheral reinforcement rib(s) perpendicular to the plane of the cover surface.
The housing and the housing cover may, in particular, each comprise four peripheral reinforcement zones positioned around said plug cavity, two being located in a plane along the axis of said longitudinal duct and two in a plane perpendicular to said axis.
Part of the reinforcing ribs of the plug cavity extending parallel to the axis thereof and/or two of the peripheral reinforcement zones on the housing may, according to a further preferred feature of the invention, constitute a continuation of part of the longitudinal reinforcement ribs on the longitudinal duct.

In a preferred embodiment of the invention, the driving spindle for the closure plug extends through the housing cover from within the housing, with means for retaining the driving spindle in the housing cover and with cooperating threading on the driving spindle and in a connection part of the closure plug for driving the closure plug.

This may in particular be achieved by providing a driving spindle which comprises a stop rim in abutment with the inside of the hollow protrusion in the housing cover, and threading at its other end, cooperating with threading in said connection part of the closure plug for driving the closure plug;
and by providing an intermediate bush with a peripheral flange, fitted on said driving spindle in abutment with said stop rim on the driving spindle, and clamped with its peripheral flange, together with a flange provided on the closure plug, between said housing and said housing cover (preventing the driving spindle to move in axial direction), whereas the intermediate bush may shaped to prevent the closure plug from rotating with the rotation of the driving spindle.

According to a preferred feature of the invention, the latter intermediate bush may be provided with an inner shape (for instance with essentially a square shaped inner bore) corresponding to the (for instance essentially square) outer shape of the connection part of the closure plug, to prevent the closure plug from rotating.

In a further specific embodiment of the invention, there may in particular be provided a stop clip, fitted in the connection part of the closure plug for abutting the end of the diving thread on the driving spindle, during the closing movement of the stopcock; this provides a positive stop of the stopcock operation to avoid damage to the plug when closing the stopcock.

Preferably, the driving spindle may also be provided with at least one sealing ring in its passage through the housing cover.

The plastic materials for the new stopcock according to the invention have to be selected from materials having a high dimension stability and shape stability.
Preferred materials comprise water resistant engineering plastics, in particular :
polyphenylene ether - PPE,
polyamide - PA (such as PA 66, PA 6, and other engineering polyamides),
polypropylene - PP,
POM (such as the product marketed under the trademark "DELRIN),
polyvinylchmoride - PVC,
etc.
These materials may be reinforced, in particular glass fibre reinforced; PPE PA and PP are preferably used as glass fibre reinforced materials.

The plastic stopcock according to the invention may appropriately involve a limited number of metal parts, such as for instance
the screws / bolts fixing the housing cover to the housing;
the diving spindle;
the connection part of the closure plug (the so called "spindle bolt")
the stop clip in the connection part.

Further features and details of the invention will become apparent from the following description of a specific embodiment of the invention, given by way of mere illustrative example, having reference to the attached drawings.

In the drawings :

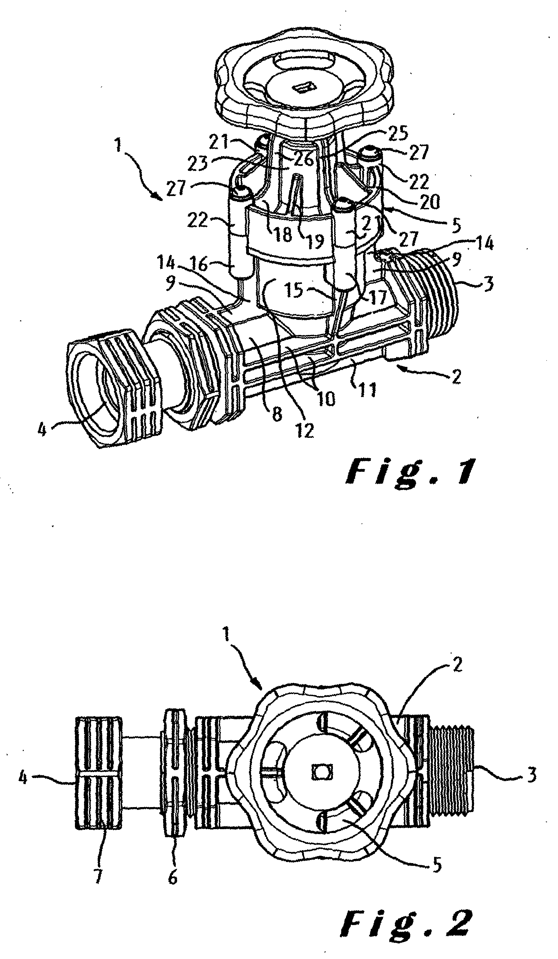

Figure 1 represents a view, in perspective, of a stopcock according to the invention;
Figure 2 represents a top plan view of the stopcock of figure 1;
Figure 3 represents an exploded view of the stopcock of figure 1, showing all its constituting parts;
Figure 4 represents a front plan view of the stopcock of figure 1;
Figure 5 represents a section of the stopcock in direction A-A of figure 4;
Figure 6 represents a section of the stopcock in direction C-C of figure 4.

The stopcock shown in the figures, designated as a whole with reference numeral (1), comprises a housing (2) with its outlet access (3) and its inlet access (4), and a housing cover (5), made of plastic material.
The connection bolts (6) and (7) are equally made of plastic, but could also be made of metal.

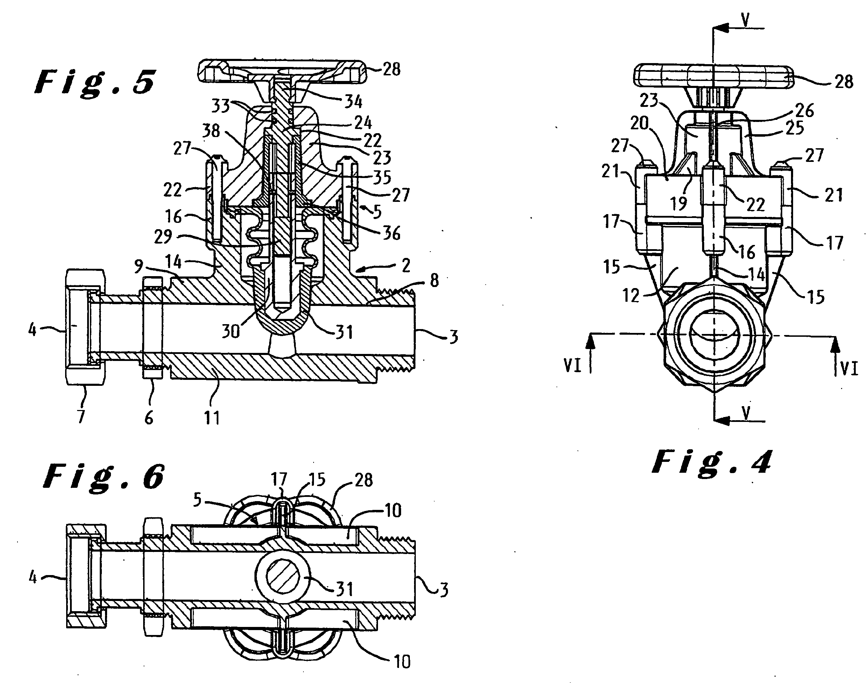

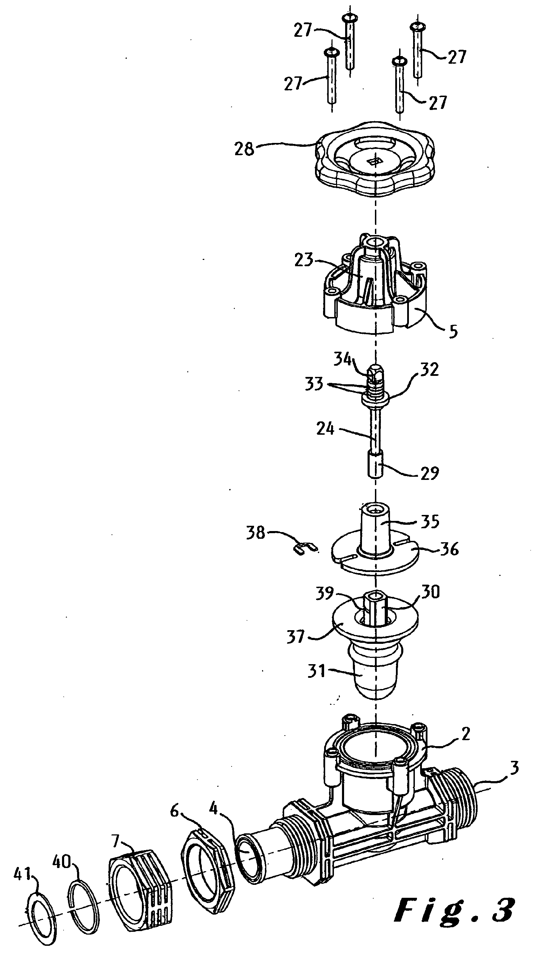

The housing (2) with its outlet (3) and inlet (4) consists of one moulded (and/or tooled) plastic piece comprising :
a longitudinal duct (8) with longitudinal reinforcing ribs (9, 10, 11); and
a plug cavity (12), with the main axis of said cavity perpendicular to the longitudinal duct (8), and with reinforcing ribs (14, 15) extending parallel to the main axis of the cavity, and four peripheral reinforcement zones (16, 17) for fixing the housing cover (5) to the housing (2);
the housing cover (5) also consists of one moulded (and/or tooled) plastic piece comprising :
a cover surface with radial reinforcement ribs (18, 19), with a peripheral rib (20) perpendicular to the plane of the cover surface, and with four reinforcement zones (21, 22) for fixing the housing cover (5) to the housing (2), and
a hollow protrusion (23) along the main axis of the plug cavity (12) for holding the driving spindle of the stopcock (visible on figures 3, 4 and 5 and designated there with reference numeral (24)), provided with radial reinforcement ribs (25, 26).

Two reinforcement zones (16) of the housing (2), respectively two reinforcement zones (22) of the housing cover (5) are located in a plane along the axis of the longitudinal duct (8) and two reinforcement zones (17) of the housing (2), respectively two reinforcement zones (21) of the housing cover (5) are located in a plane perpendicular to the axis of the longitudinal duct (8).

The longitudinal reinforcements (9) continue into the reinforcing ribs (14) of the plug cavity (12) and into the reinforcement zones (16) of the plug cavity (12).
The radial reinforcements (18) of the housing cover (5) continue into the reinforcement zones (22) of the housing cover (5) and into the radial reinforcements (26) of the hollow protrusion (23) of the housing cover (5).

The housing cover (8) is fixed to the housing (2) by means of four screws (27) extending through the reinforcements ((21, 22) into the reinforcements (16, 17). (or through the reinforcements (16, 17) into bolts not shown in the embodiment represented in the figures).

The stopcock can be actuated by means of the handle designated with reference numeral (28).

The various parts referred to here above as well as the internal parts of the stopcock embodiment illustrated in the figures, appear more clearly on the exploded view of figure 3 and/or on the section of figure 5.

These figures show :
the driving spindle (24) of the stopcock, with its threaded end (29) cooperating with corresponding threading in the connection part or "spindle bolt" (30) of the closure plug (31), and with a stop rim (32) for abutment with the inside of the hollow protrusion (23) in the housing cover (5);
two sealing rings (33), made of NBR, at the upper end of the driving spindle, and the driving spindle extremity (34), shaped to receive the handle (28);
an intermediate bush (35) with a peripheral flange (36), fitting on the driving spindle (24) and clamped with its peripheral flange (36) between the housing (2),and the housing cover (5), together with a flange (37) of the closure plug (31);
the interior of the intermediate bush (35) is shaped as a essentially square boring matching the essentially square shape of the spindle bolt (30), so as to prevent the closure plug to rotate with the rotation of the driving spindle;
a stop clip (38) is fitted into a slit (39) in the spindle bolt (30), to provide an abutment for the end of the driving thread on the driving spindle, during the closing movement of the stopcock; this provides a positive stop of the stopcock operation to avoid damage to the plug when closing the stopcock;
a metal (stainless steel) ring (40) and a (EPDM) sealing ring (41) for connecting the stopcock to the waterworks, by means of the internally threaded connection bolt (7).

The invention has thus been explained in detail having reference to one particular embodiment as illustrated in the drawings.
It should however be observed that these details of the illustrated embodiment do not involve any limitation of the scope of the invention as disclosed in the above text and as expressed in the claims here below and that many variations within the scope of these claims will be readily apparent to the skilled art person.

## Claims

1. Stopcock (1) comprising a plastic housing (2) with an inlet (4) and an outlet (3) access, a closure plug (31) in the plastic housing controlling the passage between inlet and outlet, a plastic housing cover (5) and a driving spindle (24) for said closure plug extending through said plastic housing cover, wherein said housing (2) with its inlet (4) and outlet (3) accesses consists of a moulded plastic piece comprising
a longitudinal duct (8),
and a plug cavity (12) provided with its axis perpendicular to said longitudinal duct (8),
and said housing cover (5) consists of a moulded plastic piece comprising
a cover surface,
and a hollow protrusion (23), along the axis of said plug cavity (12), for holding said driving spindle (24) for the closure plug (31),
**characterised in that**
the longitudinal duct (8) comprises longitudinal reinforcing ribs (9, 10, 11), the plug cavity (12) comprises reinforcing ribs (14, 15) extending parallel to its axis and with at least three peripheral reinforcement zones for (16, 17) for fixing the housing cover (5) to the housing (2), the cover surface comprises radial reinforcement ribs (18, 19) and/or one or more peripheral rib(s) (20), perpendicular to the plane of said cover surface, with at least three peripheral reinforcement zones (21, 22) for fixing the housing cover (5) to the housing (2), and the hollow protrusion comprises radial reinforcement ribs (25, 26).

2. Stopcock according to claim 1, **characterised in that** said peripheral reinforcement zones (16, 17) on the housing cover (5) are located on said peripheral reinforcement rib(s) (20) perpendicular to the plane of the cover surf ace.

3. Stopcock according to any one of claim 1 and 2, **characterised in that** the housing (2) and the housing cover (9) each comprise four peripheral reinforcement zones (16, 17 and 21, 22) positioned around said plug cavity (12), two being located in a plane along the axis of said longitudinal duct and two in a plane perpendicular to said axis.

4. Stopcock according to claim 3, **characterised in that** part of said reinforcing ribs (14) of the plug cavity (12) extending parallel to the axis thereof and/or two of said peripheral reinforcement zones (16) on the housing are a continuation of part of said longitudinal reinforcement ribs (9) on the longitudinal duct.

5. Stopcock according to any one of claims 1 to 4, **characterised in that** said driving spindle (24) for the closure plug (31) extends through the housing cover (5) from within the housing (2), with means for (23, 32) retaining the driving spindle (24) in the housing cover (5) and with in cooperating threading (29) on the driving spindle (24) and in a connection part (30) of the closure plug (31) for driving the closure plug (31).

6. Stopcock according to claim 5, **characterised in that** said driving spindle (24) comprises a stop rim (32) in abutment with the inside of the hollow protrusion (23) in the housing cover (5), and threading (29) at its other end, cooperating with threading (29) in said connection part (30) of the closure plug (31) for driving the closure plug (31).

7. Stopcock according to any one of claims 5 and 6, **characterised in that** an intermediate bush (35) with a peripheral flange (36), fitted on said driving spindle (24) in abutment with said stop rim (32) on the driving spindle (24), is clamped with its peripheral flange (36), together with a flange (37) provided on the closure plug (31), between said housing (2) and said housing cover (5), whereas said intermediate bush (35) is shaped to prevent the closure plug (31) from rotating with the rotation of the driving spindle (24).

8. Stopcock according to claim 7, **characterised in that** said intermediate bush (35) is provided with an inner shape corresponding to the outer shape of said connection part (30) of the closure plug (31), to prevent the closure plug (31) from rotating.

9. Stopcock according to any one of claims 5 to 8, **characterised in that** a stop clip (38) is fitted in the connection part (30) of the closure plug (31) for abutting the end of the diving thread (29) on the driving spindle (24), during the closing movement of the stopcock.

10. Stopcock according to any one of claims 5 to 9, **characterised in that** the driving spindle is provided with at least one sealing ring (33) in its passage through the housing cover.

## Patentansprüche

1. Absperrhahn (1), der ein Kunststoffgehäuse (2) mit einem Einlass-(4) und einem Auslasszugang (3) aufweist, wobei ein Verschlussstopfen (31) in dem Kunststoffgehäuse den Durchgang zwischen dem Einlass und dem Auslass kontrolliert, einen Kunststoffgehäusedeckel (5) und eine Antriebsachse (24) für den Verschlussstopfen, der sich durch den Kunststoffgehäusedeckel erstreckt,
wobei das Gehäuse (2) mit seinem Einlass- (4) und seinem Auslasszugang (3) aus einem geformten Kunststoffteil besteht, der Folgendes aufweist:
eine Längsleitung (8),
einen Stopfenhohlraum (12), der mit seiner Achse im rechten Winkel zu der Längsleitung (8) bereitgestellt ist,
und wobei der Gehäusedeckel (5) aus einem geformten Kunststoffteil besteht, der Folgendes aufweist:
eine Deckeloberfläche
einen hohlen Vorsprung (23) entlang der Achse des Stopfenhohlraums (12) zum Halten der Antriebsachse (24) für den Verschlussstopfen (31),
**dadurch gekennzeichnet,**
**dass** die Längsleitung (8) Längsverstärkungsrippen (9, 10, 11) aufweist,
**dass** der Stopfenhohlraum (12) Verstärkungsrippen (14, 15) aufweist, die sich parallel zu seiner Achse erstrecken und mit mindestens drei Peripherie- verstärkungszonen (16, 17) zum Befestigen des Gehäusedeckels (5) an dem Gehäuse (2),
**dass** die Deckeloberfläche radiale Verstärkungsrippen (18, 19) und/oder eine oder mehrere periphere Rippen (20) senkrecht zu der Ebene der Deckeloberfläche mit mindestens drei peripheren Verstärkungszonen (21, 22) zum Befestigen des Gehäusedeckels (5) an dem Gehäuse (2) aufweist, und
**dass** der hohle Vorsprung radiale Verstärkungsrippen (25, 26) aufweist.

2. Absperrhahn nach Anspruch 1, **dadurch gekennzeichnet, dass** die peripheren Verstärkungszonen (16, 17) auf dem Gehäusedeckel (5) auf den peripheren Verstärkungsrippen (20) senkrecht zu der Ebene der Deckeloberfläche liegen.

3. Absperrhahn nach einem der Ansprüche 1 und 2, **dadurch gekennzeichnet, dass** das Gehäuse (2) und der Gehäusedeckel (5) jeweils vier periphere Verstärkungszonen (16, 17 und 21, 22) aufweisen, die um den Stopfenhohlraum (12) angeordnet sind, wobei sich zwei in einer Ebene entlang der Achse der Längsleitung und zwei in einer Ebene senkrecht zu der Achse befinden.

4. Absperrhahn nach Anspruch 3, **dadurch gekennzeichnet, dass** der Teil der Verstärkungsrippen (14) des Stopfenhohlraums (12), der sich parallel zu dessen Achse erstreckt und/oder zwei der peripheren Verstärkungszonen (16) auf dem Gehäuse eine Fortsetzung eines Teils der Längsverstärkungsrippen (9) auf der Längsleitung sind.

5. Absperrhahn nach einem der Ansprüche 1 bis 4, **dadurch gekennzeichnet, dass** sich die Antriebsachse (24) für den Verschlussstopfen (31) durch den Gehäusedeckel (5) von innerhalb des Gehäuses (2) her erstreckt, mit Mitteln (23, 32) zum Zurückhalten der Antriebsachse (24) in dem Gehäusedeckel (5), und mit zusammenwirkendem Ge- winde (29) auf der Antriebsachse (24) und in einem Anschlussteil (30) des Verschlussstopfens (31) zum Betätigen des Verschlussstopfens (31).

6. Absperrhahn nach Anspruch 5, **dadurch gekennzeichnet, dass** die Antriebsachse (24) einen Feststellrand (32) anschlagend an die Innenseite des hohlen Vorsprungs (23) in dem Gehäusedeckel (5) aufweist, und ein Gewinde (29) an ihrem anderen Ende, das mit dem Gewinde (29) in dem Anschlussteil (30) des Verschlussstopfens (31) zum Betätigen des Verschlussstopfens (31) zusammenwirkt.

7. Absperrhahn nach einem der Ansprüche 5 und 6, **dadurch gekennzeichnet, dass** eine Zwischenführungsbuchse (35) mit einem peripheren Flansch (36), der auf die Antriebsachse (24) in Anschlag an den Feststellrand (32) auf die Antriebsachse (24) gepasst ist, mit ihrem peripheren Flansch (36) mit einem Flansch (37), der auf dem Verschlussstopfen (31) zwischen dem Gehäuse (2) und dem Gehäusedeckel (5) vorgesehen ist, befestigt ist, während die Zwischenführungsbuchse (35) ausgebildet ist, um den Verschlussstopfen (31) daran zu hindern, mit der Drehung der Antriebsachse (24) zu drehen.

8. Absperrhahn nach Anspruch 7, **dadurch gekennzeichnet, dass** die Zwischenführungsbuchse (35) mit einer Innenform versehen ist, die der äußeren Form des Verbindungsteils (30) des Verschlussstopfens (31) entspricht, um den Verschlussstopfen (31) am Drehen zu hindern.

9. Absperrhahn nach einem der Ansprüche 5 bis 8, **dadurch gekennzeichnet, dass** ein Feststellclip (38) in den Verbindungsteil (30) des Verschlussstopfens (31) gepasst ist, um an das Ende des Gewindes (29) an der Antriebsachse (24) während der Schließbewegung des Absperrhahns anzuschlagen.

10. Absperrhahn nach einem der Ansprüche 5 bis 9, **dadurch gekennzeichnet, dass** die Antriebsachse (24) mit mindestens einem Dichtring (33) in ihrem Durchgang durch den Gehäusedeckel versehen ist.

## Revendications

1. Robinet d'arrêt (1) comprenant un logement en plastique (2) avec un accès d'entrée (4) et de sortie (3), un bouchon de fermeture (31) dans le logement en plastique contrôlant le passage entre l'entrée et la sortie, un couvercle de logement (5) en plastique et une broche d'entraînement (24) pour ledit bouchon de fermeture s'étendant à travers ledit couvercle de logement en plastique,
dans lequel ledit logement (2) avec ses accès d'entrée (4) et de sortie (3) consiste en une pièce en plastique moulée comprenant
un conduit longitudinal (8)
et une cavité (12) pour bouchon prévue avec son axe perpendiculaire audit conduit longitudinal (8),
et ledit couvercle de logement (5) consiste en une pièce en plastique moulée comprenant
une surface de couvercle
et une protubérance creuse (23), le long de l'axe de ladite cavité (12) pour bouchon, pour retenir ladite broche d'entraînement (24) pour le bouchon de fermeture (31),
**caractérisé en ce que**
le conduit longitudinal (8) comprend des nervures de renforcement longitudinales (9, 10, 11),
la cavité (12) pour bouchon comprend des nervures de renforcement (14, 15) s'étendant parallèlement à son axe et avec au moins trois zones de renforcement périphériques (16, 17) pour fixer le couvercle de logement (5) au logement (2),
la surface de couvercle comprend des nervures de renforcement radiales (18, 19) et / ou une ou plusieurs nervure(s) (20), perpendiculaires au plan de ladite surface de couvercle, avec au moins trois zones de renforcement périphériques (21, 22) pour fixer le couvercle de logement (5) au logement (2), et
la protubérance creuse comprend des nervures de renforcement radiales (25, 26).

2. Robinet d'arrêt selon la revendication 1, **caractérisé en ce que** lesdites zones de renforcement périphériques (16, 17) sur le couvercle de logement (5) sont situées sur ladite (lesdites) nervure(s) de renforcement périphérique(s) perpendiculaire(s) au plan de la surface de couvercle.

3. Robinet d'arrêt selon une quelconque des revendications 1 et 2, **caractérisé en ce que** le logement (2) et le couvercle de logement (5) comprennent chacun quatre zones de renforcement périphériques (16, 17 et 21, 22) positionnées autour de ladite cavité (12) pour bouchon, deux étant situées dans un plan le long de l'axe dudit conduit longitudinal et deux dans un plan perpendiculaire audit axe.

4. Robinet d'arrêt selon la revendication 3, **caractérisé en ce qu'**une partie desdites nervures de renforcement (14) de la cavité (12) pour bouchon s'étendant parallèlement à l'axe de celle-ci et / ou deux desdites zones de renforcement périphériques (16) sur le logement sont une continuation d'une partie desdites nervures de renforcement longitudinales (9) sur le conduit longitudinal.

5. Robinet d'arrêt selon une quelconque des revendications 1 à 4, **caractérisé en ce que** ladite broche d'entraînement (24) pour le bouchon de fermeture (31) s'étend à travers le couvercle de logement (5) à partir de l'intérieur du logement (2), avec des moyens (23, 32) pour retenir la broche d'entraînement (24) dans le couvercle de logement (5) et avec un filetage coopérant (29) sur la broche d'entraînement (24) et dans une pièce de connexion (30) du bouchon de fermeture (31) pour entraîner le bouchon de fermeture (31).

6. Robinet d'arrêt selon la revendication 5, **caractérisé en ce que** ladite broche d'entraînement (24) comprend une bride d'arrêt (32) aboutée à l'intérieur de la protubérance creuse (23) dans le couvercle de logement (5) et un filetage (29) à son autre extrémité, coopérant avec le filetage (29) dans ladite pièce de connexion (30) du bouchon de fermeture (31) pour entraîner le bouchon de fermeture (31).

7. Robinet d'arrêt selon une quelconque des revendications 5 et 6, **caractérisé en ce qu'**une douille intermédiaire (35) avec une collerette périphérique (36), montée sur ladite broche d'entraînement (24) de manière à être aboutée à ladite bride d'arrêt (32) sur la broche d'entraînement (24), est serrée avec sa collerette périphérique (36) conjointement avec une collerette (37) prévue sur le bouchon de fermeture (31), entre ledit logement (2) et ledit couvercle de logement (5), tandis que la douille intermédiaire (35) est façonnée pour empêcher le bouchon de fermeture (31) de tourner quand la broche d'entraînement (24) tourne.

8. Robinet d'arrêt selon la revendication 7, **caractérisé en ce que** ladite douille intermédiaire (35) est pourvue d'une forme intérieure correspondant à la forme extérieure de ladite pièce de connexion (30) du bouchon de fermeture (31) pour empêcher le bouchon de fermeture (31) de tourner.

9. Robinet d'arrêt selon une quelconque des revendications 5 à 8, **caractérisé en ce qu'**un étrier d'arrêt (38) est monté dans la pièce de connexion (30) du bouchon de fermeture (31) pour fournir un aboutement à l'extrémité du filetage d'entraînement (29) sur la broche d'entraînement (24) pendant le mouvement de fermeture du robinet d'arrêt.

10. Robinet d'arrêt selon une quelconque des revendications 5 à 9, **caractérisé en ce que** la broche d'entraînement (24) est pourvue d'au moins une bague d'étanchéité (33) dans son passage à travers le couvercle de logement.
